# DEMANDE DE BREVET EUROPEEN

(11) **EP 2 343 865 A1**
(43) Date de publication de la demande: **13.07.2011**
(21) Numéro de dépôt: 11150620.0
(22) Date de dépôt: 11.01.2011
(51) Int. Cl.: H04L 29/06

(54) **Procédé et dispositif de partage de contenu**

(30) Priorité: 11.01.2010 FR 1050125
(71) Demandeur: Alcatel Lucent, 75007 Paris (FR)
(72) Inventeur: Outtagarts, Abdelkader, 91620, Nozay (FR); Germaneau, Alexis, 91620, Nozay (FR)
(74) Mandataire: Nicolle, Olivier

(57) **Abrégé**

Le dispositif de partage de contenu, comprend des moyens d'émission d'une requête d'enregistrement contenant un entête identifiant un équipement d'utilisateur (UE), et générant un enregistrement dudit équipement (UE) auprès du coeur IMS (IMC), un module de traitement-médiateur (IME) et un module de stockage de contenus reliés l'un et l'autre au coeur IMS (IMC), des moyens d'inscription pour inscrire auprès du module de traitement-médiateur (IME) ledit équipement d'utilisateur (UE) ainsi enregistré auprès du coeur IMS (IMC), ledit module de traitement-médiateur (IME) étant apte, en réponse à une demande de partage d'un contenu choisi en provenance d'un équipement d'utilisateur (UE) ainsi enregistré auprès du coeur IMS et inscrit auprès du module de traitement-médiateur (IME), à établir une session SIP entre ledit équipement d'utilisateur (UE) et ledit module de traitement-médiateur (IME) ; et apte, après établissement de la session SIP, à partager le contenu entre ledit équipement d'utilisateur (UE) et le module de stockage (MDB).

## Description

La présente invention se rapporte au partage de contenu, multimédia ou vidéo, et plus particulièrement au partage de contenu faisant appel aux technologies de diffusion de contenu sur Internet, par exemple celles utilisant la norme IMS (IP Multimédia Subsystem) pour le contrôle de sessions IPTV (Internet Protocol Télévision).

Elle concerne les équipements d'utilisateurs de contenu tels que les terminaux STB (set-top-box), les terminaux IPTV, ou les stations de jeux.

On entend ici par partage de contenu le téléchargement montant (upload) ou descendant (download) de contenu.

On connaît déjà des solutions de partage de fichiers vidéo ou multimédia sur Internet. Dans ce genre de solution, l'utilisateur qui souhaite partager un contenu télécharge (upload) ledit contenu depuis son terminal vers un espace partagé d'un ordinateur distant.

Un tel téléchargement montant est satisfaisant pour le partage de quelques fichiers. Par contre, il devient vite très lourd et complexe en présence d'une grande quantité de fichiers à partager.

On connaît aussi des solutions de partage de fichiers vidéo ou multimédia à partir de terminaux STB ou de télévision équipée d'un disque dur. Dans ce genre de solution, l'utilisateur qui souhaite partager un contenu télécharge ledit contenu depuis son terminal vers un serveur FTP (File Transfer Protocol) via un réseau de communication TCP/IP.

Un tel téléchargement montant est également satisfaisant pour le partage de quelques fichiers. Toutefois, il n'apporte aucune sécurité dans le partage de fichiers entre machines distantes. De plus, une telle solution est de type propriétaire ce qui restreint l'accès aux seuls utilisateurs d'un fournisseur de services.

La présente invention remédie à ces inconvénients.

Elle porte sur un procédé de partage de contenu.

Selon une définition générale de l'invention, le procédé comprend les étapes suivantes :
a. émettre par un équipement d'utilisateur une requête d'enregistrement contenant un entête identifiant ledit équipement, et générant un enregistrement dudit équipement auprès d'un module S-CSCF du coeur IMS,
b. prévoir un module de traitement-médiateur et un module de stockage de contenu reliés l'un et l'autre au coeur IMS;
c. inscrire auprès du module de traitement-médiateur ledit équipement d'utilisateur ainsi enregistré;
d. en réponse à une demande de partage d'un contenu choisi en provenance d'un équipement d'utilisateur ainsi enregistré et inscrit, établir une session SIP (Session Internet Protocol) entre ledit équipement d'utilisateur et ledit module de traitement-médiateur ;
e. après établissement de la session SIP, partager le contenu choisi entre ledit équipement d'utilisateur et le module de stockage.

Ainsi, grâce à l'invention, le partage de contenu est simplifié et sécurisé par rapport aux solutions antérieures. En effet, seul un utilisateur dont l'équipement est enregistré auprès d'un module S-CSCF du coeur IMS et inscrit auprès du module de traitement-médiateur peut partager des fichiers depuis son équipement. De plus, dans la mesure où il est fondé sur des standards IMS et SIP, le partage de contenus conforme à l'invention n'est pas de type propriétaire et donc ouvert à tous fournisseurs de services et opérateurs.

Selon une réalisation, le partage du contenu comprend une étape dans laquelle le contenu est téléchargé selon un téléchargement montant (« upload ») depuis l'équipement d'utilisateur vers le module de stockage.

Selon une autre réalisation, le partage du contenu comprend une étape dans laquelle le contenu est téléchargé selon un téléchargement descendant « download » depuis le module de stockage vers l'équipement d'utilisateur.

La présente invention a également pour objet un dispositif de partage de contenu.

Selon un autre aspect de l'invention, le dispositif de partage de contenu comprend des moyens d'émission d'une requête d'enregistrement contenant un entête identifiant un équipement d'utilisateur, et générant un enregistrement dudit équipement auprès d'un module S-CSCF du coeur IMS, un module de traitement-médiateur et à un module de stockage de contenu reliés l'un et l'autre au coeur IMS, des moyens d'inscription pour inscrire auprès du module de traitement-médiateur ledit équipement d'utilisateur ainsi enregistré auprès du module S-CSCF du coeur IMS, le module de traitement-médiateur étant apte, en réponse à une demande de partage d'un contenu choisi en provenance d'un équipement d'utilisateur ainsi enregistré auprès du module S-CSCF et inscrit auprès du module de traitement-médiateur, à établir une session SIP entre ledit équipement d'utilisateur et ledit module de traitement-médiateur; et apte, après établissement de la session SIP, à partager le contenu choisi entre ledit équipement d'utilisateur et le module de stockage.

En pratique, l'équipement d'utilisateur est du type terminal STB, terminal IPTV, station de jeux.

D'autres caractéristiques et avantages de l'invention apparaîtront à la lumière de la description détaillée et des dessins dans lesquels :
- la **figure 1** représente schématiquement l'architecture du partage de contenu selon l'invention ;
- la **figure 2** représente schématiquement un enregistrement d'un équipement auprès du coeur IMS et du module de traitement-médiateur selon l'invention ; et
- la **figure 3** illustre schématiquement les étapes du procédé selon l'invention.

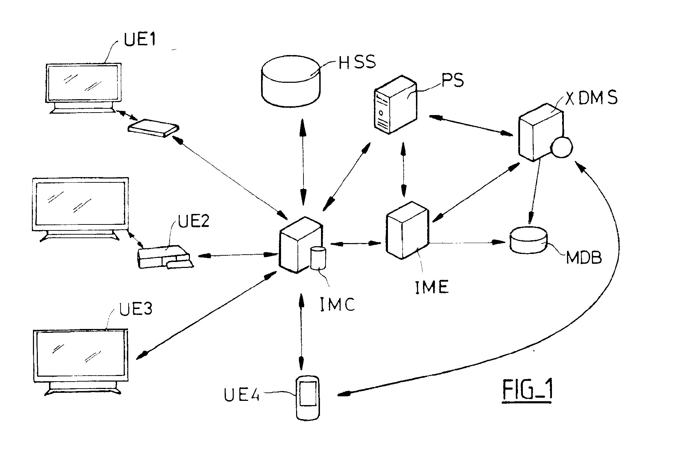

En référence à la **figure 1****,** le partage de contenu concerne des équipements d'utilisateur UE qui peuvent être du type modem-routeur relié à un appareil de télévision référencés en UE1, Set-Top-Box STB référencé en UE2, téléviseur à disque dur référencé en UE3, ou appareil téléphonique portable référencé en UE4.

Pour bénéficier des avantages du tout IP (Internet Protocol) ; les équipements d'utilisateurs UE communiquent entre eux à travers un réseau de communication conforme à la norme IMS. Les fonctions d'un coeur IMC de réseau IMS comprennent un module HSS (Home Subscriber Server) et un module CSCF (Call Session Control Functions) réalisant les fonctionnalités de « proxy », « interrogating » et « serving ».

L'architecture du réseau IMS est complétée ici par un serveur de présence PS.

En outre, un module de traitement-médiateur IME est couplé à un serveur XDM (XML Document Management) référencé XMDS, et à une base de données multimédia MDB.

En référence à **l'annexe 1,** chaque équipement d'utilisateur UE qui souhaite partager des contenus vidéo ou multimédia utilise un agent d'utilisateur (user agent) lui permettant de réaliser une requête d'enregistrement auprès du réseau IMS, lorsque ledit équipement d'utilisateur est connecté au réseau de communication Internet.

Ici, l'équipement d'utilisateur UE est par exemple un poste de télévision « Sony TV 1.06 ». L'entête du message identifie ainsi l'équipement d'utilisateur et indique les propriétés et caractéristiques vidéo de l'équipement. La valeur de l'entête « user agent » permet ainsi de renseigner le réseau IMS du type de l'équipement (TV, STB) et de la version dudit équipement.

L'entête « user agent » et la valeur correspondante (type et version de l'équipement) sont ajoutés à l'entête de contact du standard SIP dans le but d'être sauvegardés dans le coeur IMS, et plus particulièrement dans le module d'enregistrement, appelé encore REGISTAR.

L'équipement d'utilisateur UE réalise une requête d'enregistrement REGISTER en utilisant la signalisation selon le protocole SIP (Session Internet Protocol).

Pour indiquer sa présence, l'équipement d'utilisateur UE réalise également une requête à destination du serveur de présence PS via une requête SIP PUBLISH.

La valeur de l'agent d'utilisateur (user agent) de l'équipement d'utilisateur permet au module de traitement-médiateur IME de connaître le type d'équipement d'utilisateur (STB, IPTV,...).

Après enregistrement, le coeur IMC du réseau, notamment le module S-CSCF vérifie les caractéristiques ainsi ajoutées à chaque équipement d'utilisateur via une requête d'enregistrement. Plus précisément, le module de traitement-médiateur IME a besoin de savoir si l'utilisateur SIP (ici un poste de télévision ou un terminal STB) est bien maintenant enregistré et toujours disponible.

En référence à **l'annexe 2,** on a représenté la signalisation émanant du coeur IMS qui indique au module de traitement-médiateur IME les équipements d'utilisateurs UE qui ont fait une requête d'enregistrement auprès du coeur IMS. La signalisation est accompagnée des critères et caractéristiques vidéo associées à chaque équipement d'utilisateur. Lorsque la valeur de l' « User Agent » est égale à une valeur correspondant à un équipement de type TV ou STB, une requête est initiée vers le module de traitement-médiateur IME.

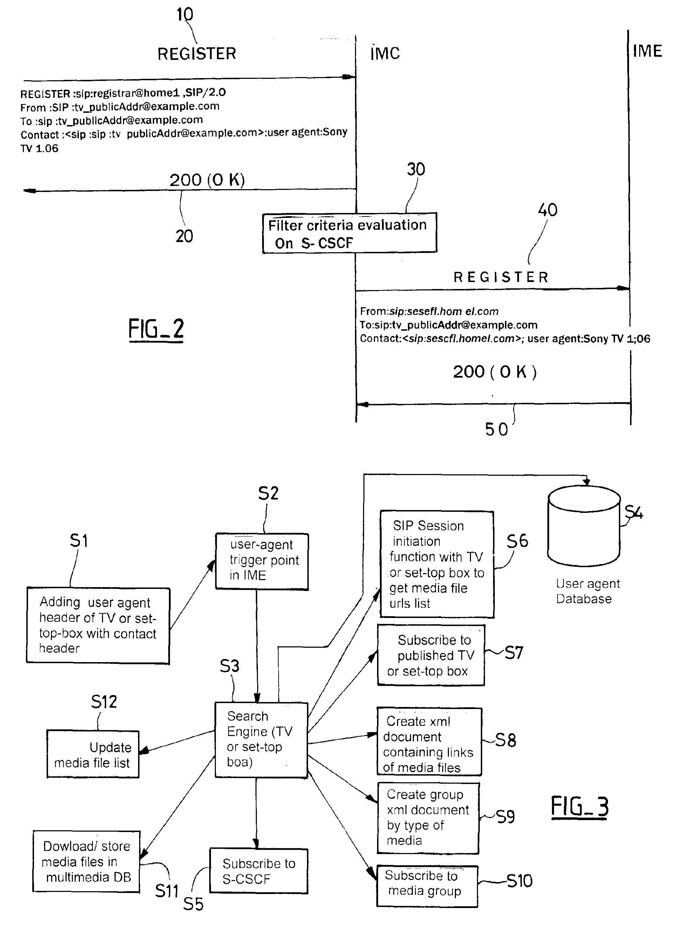

En référence à la **figure 2****,** on a représenté un test réalisé par le coeur IMS (ici le module S-CSCF) pour déterminer l'équipement d'utilisateur qui souhaite partager des contenus. La requête reçue par le module de traitement-médiateur IME est filtrée en outre pour rechercher des informations supplémentaires relatives à l'équipement à partir de la valeur de l'entête « User Agent ».

Dans l'étape 10, l'équipement utilisateur fait une requête SIP REGISTER, référencée 10, à destination du coeur IMS. Ici, la requête émane d'un équipement d'utilisateur ayant l'adresse **tv publicAdrr@home1.com** et un entête indiquant un agent d'utilisateur correspondant à un poste de télévision ou un terminal STB.

La requête est destinée au module de traitement-médiateur IME à l'adresse ime.home1.com. Le destinataire (to) est indiqué par l'adresse tv_publicAdrr, préalablement enregistrée dans le coeur IMS. Le coeur IMS (ici le module S-CSCF) indique sa propre adresse dans l'entête de l'envoyeur (from). En outre, le module S-CSCF indique sa propre adresse dans l'entête de contact.

Cette signalisation permet au module S-CSCF d'être contacté et ainsi empêcher au module de traitement-médiateur de diriger le contenu vidéo directement à l'équipement d'utilisateur.

Avant l'étape 20 correspondant à un accusé de réception de type 200 (OK), le module de traitement-médiateur IME collecte la valeur d'entête de l'agent d'utilisateur. En cas de besoin, le module de traitement-médiateur IME peut requérir davantage d'informations sur l'équipement d'utilisateur.

Lors de l'étape 30, le coeur IMC recherche les équipements d'utilisateur répondant aux critères mentionnés dans la requête10.

Lors de l'étape 40, le coeur IMC envoie une requête SIP REGISTER à destination du module de traitement-médiateur IME.

Pour chaque équipement d'utilisateur, le module de traitement-médiateur créé un document au format XML, identifié par une adresse SIP et contenant les liens aux contenus vidéo et/ou multimédia dudit équipement. Chaque document XML est stocké dans le serveur XDMS (**figure 1**). Ce document est retiré lorsque la présence de l'équipement d'utilisateur n'est pas rafraîchie. Le module de traitement-médiateur IME peut créer des groupes de fichiers, classés par type de contenu: film ; par format : photo, vidéo ; par taille ; par date...

Tous ces groupes de documents sont accessibles par d'autres équipements d'utilisateur qui ont souscrits à tout changement de document.

Le module de traitement-médiateur IME télécharge (upload) les fichiers multimédia ou contenus vidéo et les stocke dans la base de données multimédia MDB (**figure 1**).

Lorsque les fichiers multimédia ne sont plus accessibles ou retirés des terminaux ou équipements d'utilisateur, le module de traitement-médiateur IME détecte tout changement et retire les fichiers correspondant de la base de données MDB **(****figure 1**) et met à jour le document XML correspondant dans le serveur XDMS (**figure 1**).

En référence à la **figure 3**, on a représenté les principales étapes du procédé de partage de contenu.

Selon l'étape S1, l'équipement d'utilisateur UE émet une requête d'enregistrement SIP REGISTER contenant un entête identifiant ledit équipement, et génère un enregistrement dudit équipement auprès du coeur IMC.

Selon l'étape S2, une requête d'enregistrement est initiée lorsque la valeur de l'entête de l'agent utilisateur correspond à un terminal IPTV ou un terminal STB.

Selon l'étape S3, lorsqu'une valeur d'entête de l'agent utilisateur correspond à un terminal IPTV ou un terminal STB, le module S-CSCF envoie une requête d'enregistrement auprès du module de traitement-médiateur IME. De plus, le module de traitement-médiateur IME souscrit auprès du module S-CSCF afin d'être notifié de tout changement relatif à l'équipement (IPTV ou STB).

Selon l'étape S4, le module de stockage MDB contient la liste des agents d'utilisateur correspondant à des équipements d'utilisateur de type terminal IPTV ou terminal STB. Ce module de stockage permet à la fonction de recherche de vérifier la valeur de l'agent d'utilisateur envoyée dans la requête d'enregistrement.

Selon l'étape S5, les informations relatives au terminal sont enregistrées dans le coeur IMC (ici le module S-CSCF), et plus particulièrement dans le module REGISTAR.

Selon l'étape S6, la session SIP permet d'obtenir les adresses URL des fichiers multimédia disponibles et accessibles dans chaque terminal STB ou IPTV.

Selon l'étape S7, chaque terminal IPTV ou terminal STB souscrit un accès auprès du serveur de présence pour surveiller la disponibilité de l'équipement.

Selon l'étape S8, un document XML est créé pour chaque terminal IPTV ou terminal STB contenant une liste de fichiers multimédia à partager avec d'autres équipements. Le document XML est sauvegardé et géré par le serveur XDMS.

Selon l'étape S9, un document XML est créé pour chaque groupe de fichiers multimédia, classés chacun selon le type du contenu : film ; le format : photo, vidéo ; par la taille ; par la date. Les documents XML sont sauvegardés et gérés par le serveur XDMS.

Selon l'étape S10, le module de traitement-médiateur IME souscrit à la fonction d'accès aux documents XML gérés par le serveur XDMS.

Selon l'étape S11, les fichiers multimédia ou vidéo sont téléchargés upload (montant) et download (descendant) périodiquement de manière à être diffusés en continu (streaming) à différents équipements. La mise à jour de la base de données MDB consiste à retirer physiquement tout fichier à la demande l'équipement d'utilisateur.

En pratique, après l'établissement de la session SIP entre l'équipement UE et le module de traitement-médiateur IME, ledit module de traitement-médiateur IME utilise un protocole d'application pour le téléchargement (montant ou descendant) du fichier.

## Revendications

1. Procédé de partage de contenu, comprenant les étapes suivantes :
a) émettre par un équipement d'utilisateur (UE) une requête d'enregistrement contenant un entête identifiant ledit équipement (UE), et générant un enregistrement dudit équipement auprès d'un module S-CSCF du coeur IMS (IMC),
b) prévoir un module de traitement-médiateur (IME) et un module de stockage de contenu (MDB) reliés l'un et l'autre au coeur IMS (IMC);
c) inscrire auprès du module de traitement-médiateur (IME) ledit équipement d'utilisateur (UE) ainsi enregistré auprès du coeur IMS (IMC) ;
d) en réponse à une demande de partage d'un contenu choisi en provenance d'un équipement d'utilisateur (UE) ainsi enregistré auprès du coeur IMS (IMC) et inscrit auprès du module de traitement-médiateur (IME), établir une session SIP entre ledit équipement d'utilisateur (UE) et ledit module de traitement-médiateur (IME) ;
e) après établissement de la session SIP, partager le contenu choisi entre ledit équipement d'utilisateur (UE) et le module de stockage (MDB).

2. Procédé selon la revendication 1, dans lequel le partage du contenu comprend une étape dans laquelle le contenu est téléchargé selon un téléchargement montant depuis l'équipement d'utilisateur (UE) vers le module de stockage (MDB).

3. Procédé selon la revendication 1, dans lequel le partage du contenu comprend une étape dans laquelle le contenu est téléchargé selon un téléchargement descendant depuis le module de stockage (MDB) vers l'équipement d'utilisateur (UE).

4. Dispositif de partage de contenu, comprenant des moyens d'émission d'une requête d'enregistrement contenant un entête identifiant un équipement d'utilisateur (UE), et générant un enregistrement dudit équipement (UE) auprès d'un module S-CSCF du coeur IMS (IMC), un module de traitement-médiateur (IME) et un module de stockage de contenu reliés l'un et l'autre au coeur IMS (IMC), des moyens d'inscription pour inscrire auprès du module de traitement-médiateur (IME) ledit équipement d'utilisateur (UE) ainsi enregistré auprès du coeur IMS (IMC), ledit module de traitement-médiateur (IME) étant apte, en réponse à une demande de partage d'un contenu choisi en provenance d'un équipement d'utilisateur (UE) ainsi enregistré auprès du coeur IMS et inscrit auprès du module de traitement-médiateur (IME), à établir une session SIP entre ledit équipement d'utilisateur (UE) et ledit module de traitement-médiateur (IME) ; et apte, après établissement de la session SIP, à partager le contenu entre ledit équipement d'utilisateur (UE) et le module de stockage (MDB).

5. Dispositif selon la revendication 4, dans lequel l'équipement d'utilisateur (UE) est du type terminal STB, terminal IPTV, station de jeux.
